# EUROPÄISCHE PATENTSCHRIFT

(11) **EP 3 271 625 B1**
(45) Veröffentlichungstag und Bekanntmachung des Hinweises auf die Patenterteilung: **18.12.2019**
(21) Anmeldenummer: 16702481.9
(22) Anmeldetag: 29.01.2016
(51) Int. Cl.: F16K 29/00, F15B 13/04, F16K 31/06

(54) **VENTIL**
VALVE
VANNE

(30) Priorität: 19.03.2015 DE 102015003554
(43) Veröffentlichungstag der Anmeldung: 24.01.2018
(73) Patentinhaber: Hydac Fluidtechnik GmbH, 66280 Sulzbach/Saar (DE)
(72) Erfinder: BRUCK, Peter, 66484 Althornbach (DE)
(74) Vertreter: Bartels und Partner, Patentanwälte
(86) Internationale Anmeldenummer: PCT/EP2016/000152
(87) Internationale Veröffentlichungsnummer: WO 2016/146228

(56) Entgegenhaltungen:
- EP-A1- 2 733 398
- WO-A1-02/21032
- WO-A1-2015/028108
- DE-A1-102012 210 913
- US-A- 5 996 464
- US-A1- 2012 048 398
- US-A1- 2012 049 097

## Beschreibung

Die Erfindung betrifft ein Ventil, insbesondere Proportional-Druckregelventil, mit den Merkmalen im Oberbegriff des Anspruchs 1.

Ventile, wie Proportional-Druckregelventile, werden sehr häufig in mobilen Arbeitsmaschinen zur elektrohydraulischen Vorsteuerung von Wegeventilen verwendet. Ein dahingehender Vertreter eines solchen Ventils ist beispielsweise in der WO 2010/085991 A2 aufgezeigt.

Für "kleinere Geräte" reichen regelmäßig direkt gesteuerte Proportional-Druckregelventile aus. Bei großen Baumaschinen, wie beispielsweise Erdbewegungsmaschinen, wie Bagger, erreichen die Wegeventile der Arbeitshydraulik aber Kolbendurchmesser, bei denen eine Vorsteuerung mit direkt gesteuerten Proportional-Druckregelventilen nicht mehr sinnvoll ist. Die großen Schieberventile verursachen bei schnellem Schalten einen Vorsteuerölstrom, der für die kleinen Vorsteuerventile nicht mehr verkraftbar ist.

Für dahingehende Einsatzzwecke kommen mithin Proportional-Druckregelventile mit entsprechenden Flächenübersetzungen zum Einsatz. Diese Ventile haben eine druckwirksame Fläche, die kleiner als der Kolbendurchmesser ist. Somit werden die vom Regeldruck verursachten Kräfte, die gegen das Magnetsystem regelmäßig in Form eines Betätigungsmagneten wirken, signifikant reduziert. Der große Kolben kann aber im Vergleich zum direkt gesteuerten Ventil einen wesentlich größeren Volumenstrom passieren lassen und somit die Schaltzeiten der großen Schieberventile, was gewünscht ist, drastisch verkürzen.

Dieses Prinzip der Flächenübersetzung hat im Vergleich zu einem klassisch vorgesteuerten Proportional-Druckregelventil den großen Vorteil, dass kein permanenter Vorsteuerölstrom fließen muss. Die Leckage dieser Ventile ist insbesondere im nicht bestromten Zustand extrem gering. Dies hat bei einer Notversorgung der Proportional-Ventile mit einem Druckspeicher dann signifikante Vorteile. Es gibt aber beim "Füllen" des anzusteuernden Wegeventilkolbens dann grundsätzlich ein Problem. Damit nämlich beim Starten der Funktion die Überdeckung des Wegeventilkolbens möglichst schnell zurückgelegt werden kann, wird das Proportional-Ventil kurzzeitig von einem relativ großen Volumenstrom durchflutet. Dabei kann das Proportional-Ventil unter Umständen bis zum Hubanschlag durchgeschaltet werden. Wird dann die gewünschte Schieberposition erreicht, muss jedoch der Wegekolben in der erreichten Position auch gehalten werden; mit der Folge, dass der Vorsteuerölstrom schlagartig zu Null werden muss. Das Proportional-Ventil muss sich dann also aus seiner Endlagenposition zurück in eine mittlere Position bewegen, bei dem die Steuerkante zwischen dem Druckversorgungsanschluss P respektive Pumpenanschluss und dem Nutz- oder Arbeitsanschluss A gerade so verschlossen ist.

Dabei können bei den Lösungen im Stand der Technik Unstetigkeiten auftreten. In der Hubendlage befindet sich der Ventilkolben des Ventils auf seinem mechanischen Hubanschlag. Nach Erreichen dieses Hubanschlages hat der in der Proportionaltechnik übliche Ditherstrom dann keine Chance mehr, die bei sonstigem Betrieb üblichen Mikroschwingungen des Steuerkolbens des Betätigungsmagneten auf den Ventilkolben zu übertragen und somit dessen Reibung zu minimieren. Die sogenannte Ditherspannung bzw. der Ditherstrom wird als Dithersignal dem analögen Ansteuersignal des Betätigungsmagneten für die Betätigung des Ventilkolbens des Ventils überlagert. Das dahingehende Signal bewirkt dann, dass das Ventil bzw. dessen Kolben immer leicht vibriert, damit kein sogenannter Stick-Slip-Effekt auftritt. Grundsätzlich gilt, dass die Ditherfrequenz als Frequenz der Ditherspannung ebenso wie die Amplitude der Ditherspannung bzw. des Ditherstroms einstellbar sein sollte. Falsch eingestellte Dithersignalwerte führen zu einem schnellen Verschleiß der genannten Ventile. Wird der Ventilkolben aufgrund erhöhter Reibung wegen entsprechendem Fehlen des notwendigen Dithersignals seitens des Betätigungsmagneten aufgrund Reibungserhöhung zumindest kurzzeitig in seiner Position innerhalb des Ventilgehäuses gehalten, kommt es zu Funktionseinschränkungen, insbesondere in Form von ruckartigen Bewegungen der Arbeitsmaschine, was die Sicherheit beeinträchtigt.

Die EP 2 733 398 A1 offenbart ein Ventil, insbesondere Proportional-Druckregelventil, mit einem Ventilgehäuse, einem Betätigungsmagneten und einem in dem Ventilgehäuse längsverfahrbaren Ventilkolben zum wechselweisen Freigeben und Verbinden eines Nutzanschlusses mit einem Druckversorgungsanschluss oder einem Tankanschluss, der mittels des Betätigungsmagneten ansteuerbar ist, wobei das Ventil derart eingerichtet ist, dass, wenn im Betrieb dem analogen Ansteuersignal des Betätigungsmagneten für die Betätigung des Ventilkolbens eine Ditherspannung oder ein Ditherstrom als Dithersignal überlagert ist, bewirkt wird, dass der Ventilkolben immer leicht vibriert, damit kein sogenannter Stick-Slip-Effekt auftritt.

Weitere Ventile gehen aus der US 5 996 464, der WO 2015/028108 A1, der DE 10 2012 210 913 A1, der WO 02/21032 A1, der US 2012/0048398 A1 und der US 2012/0049097 A1 hervor.

Ausgehend von diesem Stand der Technik liegt der Erfindung die Aufgabe zugrunde, die bekannten Ventillösungen unter Beibehalten ihrer vorstehend beschriebenen Vorteile dahingehend weiter zu verbessern, dass es zu keinen Funktionseinschränkungen im vorstehend bezeichneten Sinne kommen kann. Eine dahingehende Aufgabe löst ein Ventil mit den Merkmalen des Patentanspruches 1 in seiner Gesamtheit.

Gemäß dem kennzeichnenden Teil des Patentanspruches 1 ist eine hydraulische Hubbegrenzung des Ventilkolbens vorgesehen, die im Ventilkolben eine Blende aufweist, die über die Innenseite des Ventilkolbens permanent mit dem Nutzanschluss verbunden ist und die in einen Steuerraum zwischen dem Ventilkolben und dem Ventilgehäuse ausmündet, der in Abhängigkeit der Verfahrstellung des Ventilkolbens mit dem Tankanschluss fluidführend verbunden ist, wobei am Außenumfang des Ventilkolbens eine nutartige Vertiefung vorgesehen ist, deren Breite derart gewählt ist, dass in einem Schwebezustand des Ventilkolbens zumindest zeitweise eine fluidführende Verbindung zwischen dem Steuerraum und dem Tankanschluss geschaffen ist, dass die fluidführende Verbindung von einer Steuerkante des Ventilgehäuses als Teil des hydraulischen Hubanschlags begrenzt ist, die von dem Ventilkolben oder seiner nutartigen Vertiefung überfahrbar ist, und wobei der Ventilkolben mittels der hydraulischen Hubbegrenzung für den Erhalt der Dithersignalwirkung derart in die Schwebeposition innerhalb des Ventilgehäuses gelangt, dass im hydraulischen Sinne die weitere Steuerkante geschaffen ist, die einen fluidischen Kraftaufbau am Ventilkolben erlaubt, der größer als die wirkenden Magnetkräfte des an dem Ventilkolben angreifenden Betätigungsmagneten ist, wodurch der Ventilkolben kurz vor Erreichen einer mechanischen Hubbegrenzung anhaltbar ist, die aus einem Anschlag zwischen dem Ventilkolben und dem Ventilgehäuse besteht.

Dadurch, dass der Ventilkolben mittels einer hydraulischen Hubbegrenzung für den Erhalt des Dithersignals in eine Schwebeposition innerhalb des Ventilgehäuses gelangt, wird verhindert, dass wie im Stand der Technik aufgezeigt, der Ventilkolben auf die zusätzlich vorhandene mechanische Hubbegrenzung auftreffen kann, mit den beschriebenen negativen Folgen auf die Dithersignalwirkung. Dadurch, dass das erfindungsgemäße Ventil nunmehr über eine sogenannte hydraulische Hubbegrenzung verfügt, ist im hydraulischen Sinne eine weitere Steuerkante geschaffen, die einen fluiddischen Kraftaufbau am Ventilkolben erlaubt, die größer ist als die wirkenden Magnetkräfte des an dem Ventilkolben angreifenden Betätigungsmagneten, so dass der Ventilkolben kurz vor Erreichen der mechanischen Hubbegrenzung angehalten werden kann. Der Ventilkolben bleibt insoweit dann in der Schwebe oder in einer Art Schwebezustand und die über den Betätigungsmagneten aufgebrachte Dithersignalwirkung bleibt vollständig erhalten, so dass die angesprochene Reibung weiter minimiert bleibt, und Funktionseinschränkungen sind insoweit ausgeschlossen.

Im ausgeschalteten Zustand des Ventils sowie im regulären Regelbetrieb bei ausbalanciertem Wege-Ventilkolben der Arbeitsmaschine bleibt die zusätzliche neue Steuerkante des Proportional-Ventils in Form der hydraulischen Hubbegrenzung vollkommen geschlossen, so dass dort auch insoweit keine erhöhten Leckagen auftreten. Die Vorteile des vorstehend beschriebenen Ventilprinzips im Stand der Technik bleiben also auch bei der neuen Ventillösung vollständig erhalten. Insgesamt zeigt das erfindungsgemäße Ventil ein deutlich verbessertes Ansteuerverhalten des Wege-Ventilkolbens und somit auch der zugehörigen Arbeitsmaschine.

Mit der erfindungsgemäßen Lösung ist es also möglich, das feinfühlige und gleichzeitig dynamische Ansteuerverhalten von hydraulisch vorgesteuerten Wege-Ventilkolben bei Proportional-Druckregelventilen deutlich zu verbessern, was insbesondere auch für kaltes und somit hochviskoses HydraulikÖl gilt. Der systembedingte Vorteil der kleinen Leckagemengen im abgeschalteten sowie bei ausbalancierten Wege-Ventilkolben bleibt gleichfalls erhalten. Dies hat so keine Entsprechung im Stand der Technik.

Vorteilhafte Ausführungsformen der erfindungsgemäßen Ventilkonstruktion sind Gegenstand der Unteransprüche.

Im Folgenden wird die erfindungsgemäße Ventillösung anhand eines Ausführungsbeispieles nach der Zeichnung näher erläutert. Dabei zeigen in prinzipieller und nicht maßstäblicher Darstellung die
- Fig. 1: in der Art eines Längsschnittes eine bekannte Ventillösung nach dem Stand der Technik; und
- Fig. 2 und 3: in vergleichbarer Darstellung und in unterschiedlichen Funktionsstellungen die erfindungsgemäße hydraulische Hubbegrenzung bei einem Ventil nach der Fig. 1.

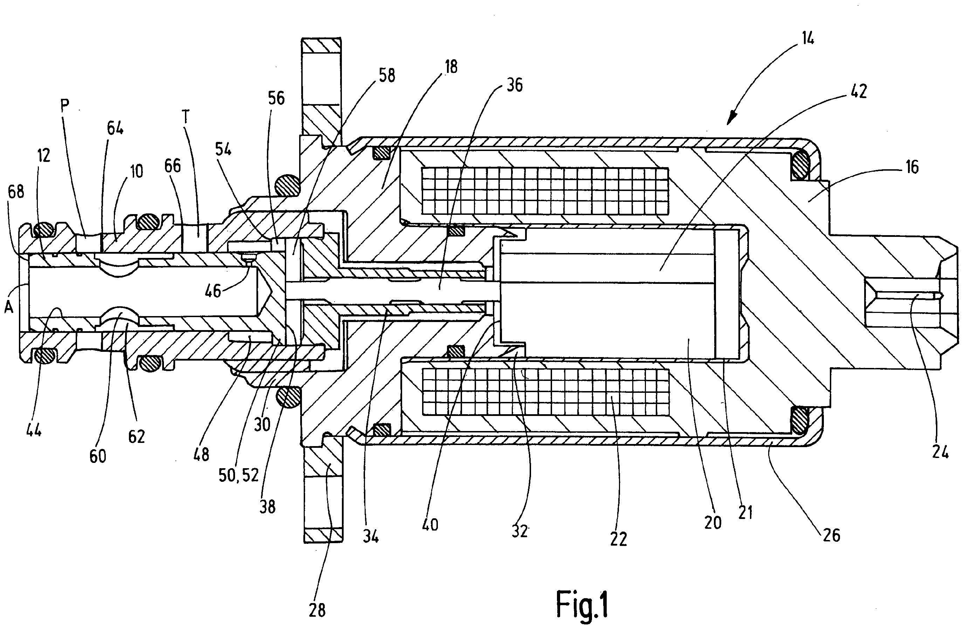

Die Fig. 1 zeigt eine Längsschnittdarstellung eines Ventils in Form eines im Stand der Technik bekannten Proportional-Druckregelventiles. Das Ventil weist ein Ventilgehäuse 10 auf mit einem in dem Gehäuse 10 längsverfahrbar geführten Ventilkolben 12. Der dahingehende Ventilkolben 12 dient dem wechselweise Freigeben und Verbinden eines Nutzanschlusses A mit einem Druckversorgungsanschluss P oder einem Tankanschluss T. Der Nutzanschluss A wird fachsprachlich auch mit Arbeitsanschluss bezeichnet, und für den Druckversorgungsanschluss P hat sich auch die Bezeichnung Pumpenanschluss durchgesetzt. Der Tankanschluss T muss nicht zwingend zu einem Versorgungstank führen; vielmehr soll die dahingehende Angabe nur verdeutlichen, dass am Anschluss T ein relativ niedriger Druck anliegt, beispielsweise ein Tank- und/oder Umgebungsdruck. Der Nutz- oder Arbeitsanschluss A ist stirnseitig im Ventilgehäuse 10 angebracht und sowohl der Druckversorgungsanschluss oder Pumpenanschluss P als auch der Tankanschluss T bestehen aus einzelnen in das Ventilgehäuse 10 eingebrachte Radialbohrungen, die auf einem vorgebbaren axialen Abstand zueinander gehalten sind. Der dahingehende Aufbau ist üblich, so dass an dieser Stelle hierauf nicht mehr näher eingegangen wird.

Zum Ansteuern des Ventilkolbens 12 dient ein als Ganzes mit 14 bezeichneter Betätigungsmagnet. Der Betätigungsmagnet 14 weist ein zweiteilig ausgebildetes Magnetgehäuse 16, 18 auf, in dem ein sogenannter Magnetanker 20 innerhalb einer Druckhülse 21 längsverfahrbar geführt ist. Zum Betätigen des Magnetankers 20 dient eine nur prinzipiell dargestellte Spulenwicklung 22, die im Magnetgehäuseteil 16 aufgenommen ist und über ein Steckerteil 24 von außen her bestrombar ist, wobei das Steckerteil 24 in Blickrichtung auf die Fig. 1 gesehen das rechte abschließende Ende des Magnetgehäuseteiles 16 bildet. Die beiden Magnetgehäuseteile 16, 18 sind über ein kappenartiges Abschlussgehäuse 26 aneinandergehalten, und im mittleren Bereich des Magnetgehäuseteiles 18 ist eine Flanschplatte 28 angesetzt, die es ermöglicht, das gesamte Ventil an einem nicht näher dargestellten Drittbauteil festzulegen, wobei hierfür das Ventilgehäuse 10 patronenartig in eine korrespondierende Ausnehmung des Drittbauteils eingreift, und wobei das Drittbauteil natürlich über entsprechende Fluidführungen verfügen muss zwecks Verbindung mit den Anschlüssen A, P, T im Ventilgehäuse 10. Zum endseitigen Festlegen des Ventilgehäuses 10 an dem Magnetgehäuseteil 18 weist dieses eine vorspringende Hülse 30 auf, in die ein rechter Endbereich des Ventilgehäuses 10 eingreift und die an ihrem freien stirnseitigen Ende entsprechend verbördelt die Festlegung des Ventilgehäuses 10 im Magnetgehäuseteil 18 ermöglicht. Ferner bilden die beiden Magnetgehäuseteile 16, 18 miteinander eine magnetische Trennung 32 in Form eines Luftspaltes aus, um eine gezielte Magnetlinieneinleitung in den Magnetanker 20 zu erreichen, unterstellt die Spulenwicklung 22 ist im Betrieb der Einrichtung respektive des Ventils entsprechend bestromt.

Im Magnetgehäuseteil 18 ist eine Längsbohrung eingebracht mit einem im Magnetgehäuseteil 18 stationär angeordneten Führungsteil 34, das entlang seiner Längsbohrung von einem Steuerkolben 36 durchgriffen ist. Das eine freie Ende des Steuerkolbens 36 liegt dabei an der Rückseite 38 des Ventilkolbens 12 an und mit seinem anderen freien Ende an der benachbart gegenüberliegenden Stirnseite 40 des Magnetankers 20. Dergestalt kann eine Bewegung des Magnetankers 20 auf den Ventilkolben 12 übertragen werden; ebenso kann umgekehrt der Ventilkolben 12 seine Bewegungsrichtung bei nicht bestromter Spulenwicklung 22 über den Steuerkolben 36 auf den Magnetanker 20 für dessen Verschiebebewegung übertragen. Der Magnetanker 20 ist des Weiteren mit einer Längsbohrung 42 versehen, um in den Räumen innerhalb der Magnetgehäuseteile 16, 18, an die der Magnetanker 20 stirnseitig angrenzt, einen Druckausgleich zu ermöglichen, um dergestalt Hemmnisse im Verfahrbetrieb des Magnetankers 20 zu vermeiden.

Das angesprochene Führungsteil 34 verbreitert sich zu seinem einen freien Ende hin und bildet insoweit eine Anlage- und Verbindungsfläche mit der in Blickrichtung auf die Fig. 1 gesehen rechten Stirnseite des Ventilgehäuses 10. Ferner ist der im Führungsteil 34 geführte Steuerkolben 36 in Richtung der Rückseite 38 des Ventilkolbens 12 im Durchmesser reduziert ausgebildet gegenüber den sonstigen Kolbenteilen des Steuerkolbens 36, die im Führungsteil 34 in Richtung des Magnetankers 20 geführt sind.

Wie des Weiteren die Fig. 1 zeigt, ist der Ventilkolben 12 hohl gebohrt und erlaubt dergestalt über seine Innenseite 44 eine permanente fluidführende Verbindung zwischen dem Nutzanschluss A und einer Blende 46, die radial die Wandung des Ventilkolbens 12 durchgreift. Die angesprochene Blende 46 mündet mithin mit ihrem einen freien Ende auf der Innenseite 44 des Ventilkolbens 12 aus und mit ihrem anderen Ende in einen Steuerraum 48. Der dahingehende Steuerraum 48 mit variablem Volumen ist von den Wandungsteilen des Ventilgehäuses 10 und des Ventilkolbens 12 begrenzt. Des Weiteren weist die Ventillösung eine mechanische Hubbegrenzung 50 auf, die aus einem Anschlag 52 zwischen Ventilkolben 12 und Ventilgehäuse 10 besteht. In der in der Fig. 1 gezeigten Stellung des Ventilkolbens 12 ist die mechanische Hubbegrenzung 50 "aktiv", d.h., der Ventilkolben 12 schlägt an dem Ventilgehäuse 10 von rechts nach links an. Für die Bildung des dahingehenden Anschlages 52 ist der Ventilkolben 12 an seinem freien, rechten stirnseitigen Ende entsprechend stufenförmig verbreitert ausgebildet und das Ventilgehäuse 10 selbst in diesem Bereich mit einer stufenförmigen Verjüngung 54 versehen.

Des Weiteren weist die flanschartige Verbreiterung des Ventilkolbens 12 mindestens eine in axialer Richtung verlaufende Durchgangsöffnung 56 auf, die eine fluid- oder medienführende Verbindung zwischen dem ersten Steuerraum 48 und einem weiteren Steuerraum 58 herstellt, der im Folgenden auch als sogenannter dritter Steuerraum bezeichnet ist. Der dahingehende weitere, dritte Steuerraum 58 mit variablem Volumen ist zum einen von dem Steuerkolben 36 durchgriffen und im Übrigen stirnseitig von der Rückseite 38 des Ventilkolbens 12 begrenzt sowie von der vorderen Stirnseite des verbreiterten Teils der Führung 34. In radialer Richtung ist der Steuerraum 58 von Innenwandteilen des Ventilgehäuses 10 in diesem Bereich umfasst. Nimmt, wie in der Fig. 1 gezeigt, der Ventilkolben 12 seine anschlagende Position am Ventilgehäuse 10 mittels der mechanischen Hubbegrenzung 50 ein, besteht eine fluidführende Verbindung zwischen dem Nutzanschluss A und dem Druckversorgungsanschluss P, wobei die Verbindung zum Tankanschluss T unterbunden ist.

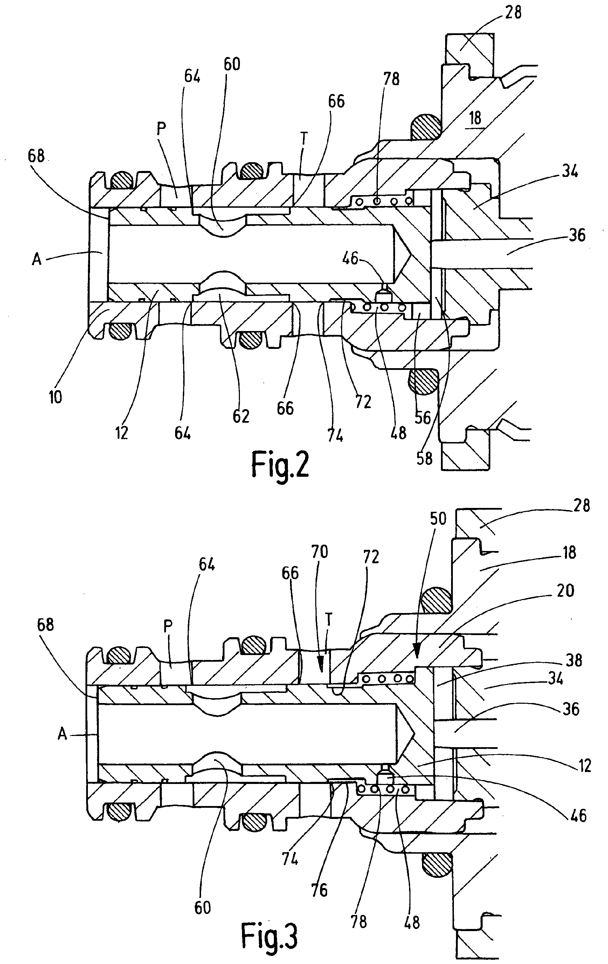

Der Ventilkolben 12 weist des Weiteren eine Querkanal 60 auf, der aus einer Vielzahl von Radialbohrungen bestehen kann. Über diesen Querkanal 60 ist die Innenseite 44 des Ventilkolbens 12 permanent fluidführend mit einem weiteren zweiten Steuerraum 62 zwischen Ventilgehäuse 10 und Ventilkolben 12 verbunden. Dieser Steuerraum 62 ist selbstredend zusammen mit dem Ventilkolben 12 längsverfahrbar im Ventilgehäuse 10 geführt und erlaubt die jeweilige fluidführende Verbindung zwischen den einzelnen Anschlüssen A, P, T bzw. deren Trennung voneinander. Die axiale Erstreckung des zweiten Steuerraumes 62 ist derart gewählt, dass in einer Verschiebestellung des Ventilkolbens 12, wie er beispielhaft in der Fig. 2 dargestellt ist, gerade noch der Ventilkolben 12 mit seinen Wandteilen die Steuerkanten 64, 66 an den Anschlüssen P bzw. T überdeckt, die durch deren Wandungsteile des Ventilgehäuses 10 gebildet sind. Des Weiteren hat der Ventilkolben 12 an seinem einen freien Ende eine druckwirksame Fläche 68, an der der Druck im Nutzanschluss A angreift. Wie des Weiteren die Fig. 1 zeigt, sind alle genannten Teile, sofern notwendig, mit entsprechenden Dichtungssystemen ausgestattet, was Stand der Technik ist, so dass an dieser Stelle hierauf nicht mehr näher eingegangen wird.

Im Nachfolgenden wird nunmehr anhand der Figuren 2 und 3 die erfindungsgemäße Ventillösung näher erläutert, als sie sich von der,bekannten Lösung nach der Fig. 1 unterscheidet. Dabei werden die bisher eingeführten Bezugszeichen auch für die insoweit geänderte, erfinderische Lösung eingesetzt und nur noch die Unterschiede insofern erläutert, als sie sich wesentlich von dem vorstehend beschriebenen Stand der Technik abheben.

Neben der bereits vorgestellten mechanischen Hubbegrenzung 50 weist die erfindungsgemäße Lösung zusätzlich für den Ventilkolben 12 eine hydraulische Hubbegrenzung 70 auf. Hierfür ist am Außenumfang des Ventilkolbens 12 eine nutartige Vertiefung 72 vorgesehen, deren Breite derart gewählt ist, dass bei einem sogenannten Schwebezustand des Ventilkolbens zumindest zeitweise eine fluidführende Verbindung zwischen dem ersten Steuerraum 48 und dem Tankanschluss T (vgl. Fig. 3) geschaffen ist, wobei die genannte fluidführende Verbindung von einer weiteren dritten Steuerkante 74 des Ventilgehäuses 10 als Teil des hydraulischen Hubanschlages 70 begrenzt ist, die von dem Ventilkolben 12 oder seiner nutartigen Vertiefung 72 überfahrbar ist. Die dahingehende dritte Steuerkante 74 ist wiederum durch die Wandung der jeweiligen Radialbohrung für den Tankanschluss T gebildet, die entgegengesetzt der zweiten Steuerkante 66 gegenüberliegend wiederum von deren Bohrungswandung begrenzt ist, soweit sie in Richtung des Betätigungsmagneten 14 weist.

Wie insbesondere die Fig. 2 zeigt und wie bereits erläutert, verschließt in einer mittleren Regelstellung des Ventilkolbens 12, ohne Abnahmemenge in Richtung des Nutzanschlusses A, der Ventilkolben 12 gerade eben den Druckversorgungsanschluss P und den Tankanschluss T mit ihren jeweiligen Steuerkanten 64 bzw. 66. Ist hingegen das Ventil in der hydraulisch geregelten Hubbegrenzung "arbeitend", übergreift die nutartige Vertiefung 72 in etwa mittig den Ventilgehäusevorsprung 76 in diesem Bereich und stellt dergestalt dann die fluidführende Verbindung zwischen dem Tankanschluss T und dem ersten Steuerraum 48 her. Zur Unterstützung der Funktions- und Betriebsweise des Ventilkolbens 12 mit seinen beiden Hubbegrenzungen 50, 70 ist im ersten Steuerraum 48 ein Energiespeicher in Form einer Druckfeder 78 angeordnet, die sich mit ihrem einen freien Ende am stirnseitigen Ende des Ventilgehäusevorsprunges 76 abstützt sowie mit ihrem anderen Ende an der flanschartigen Verbreiterung des Ventilkolbens 12 in Richtung seiner Rückseite 38.

Zur verbesserte Darstellung und um das Zusammenwirken der beiden Hubbegrenzungen 50, 70 zu verstehen, wird im Folgenden ein Funktionsablauf mit dem erfindungsgemäßen Ventil aufgezeigt. Wie bereits dargelegt, soll beim Starten der Funktion die Überdeckung des Wege-Ventilkolbens 12 möglichst schnell zurückgelegt werden, wobei das Proportional-Ventil dann kurzzeitig von einem relativ großen Volumenstrom durchflutet wird. Zum Zeitpunkt dieser Volumenstromspitze regelt dann der Proportional-Ventilkolben 12 in Blickrichtung auf die Figuren gesehen möglichst weit nach links, wobei die volle Versorgung am Nutzanschluss A über den Druckversorgungsanschluss P sichergestellt ist. In der möglichen linken Endregelstellung schlägt dann der Ventilkolben 12 nach dem Stand der Technik auf die mechanische Hubbegrenzung 50 in Form des Anschlages 52 auf, und es kommt zu den beschriebenen negativen Folgen auf die Ditherwirkung in Form des jeweiligen Dithersignals.

Wie bereits aufgezeigt, weist das erfindungsgemäße Ventil aber nun eine weitere Steuerkante 74 auf, die mit den bereits genannten weiteren Komponenten wie Blende 46 und nutartige Vertiefung 72 im Ventilkolben 12 die sogenannte hydraulische Hubbegrenzung 70 ausbildet. So ist die Anordnung im Ventilkolben 12 derart gewählt, dass jedenfalls kurz vor dem Erreichen der mechanischen Hubbegrenzung 50 über die nutartige Vertiefung 72 eine fluidführende Verbindung vom rechten Kolbenrückenraum zum Tankanschluss T des Ventils geschaffen ist, d.h., der erste Steuerraum 48 ist mit dem Tankanschluss T in fluidführender Verbindung, wobei die Regelung über die dritte Steuerkante 74 am Tankanschluss T erfolgt. Dieser Fluid- oder Ölstrom zwischen dem ersten Steuerraum 48 und dem Tankanschluss T baut eine Druckdifferenz an der Blende 46 auf und im Normalbetrieb ist der Druck auf beiden Kolbenstirnseiten 68 und 38 des Ventilkolbens 12 gleich groß mit der Folge, dass die Blende 46 dann als Dämpfung für die Bewegung des Ventilkolbens 12 wirkt. Kurz vor Erreichen der mechanischen Hubbegrenzung 50 wird jedoch diese Balance gestört, weil dann durch den Blendendruckabfall die linke Kolbenseite 68 eine größere Kraft erfährt als die rechte Kolbenseite 38. Da diese Kraft größer ist als die Magnetkraft des Betätigungsmagneten 14 in seiner Betätigungsstellung bleibt der Ventilkolben 12 kurz vor Erreichen der mechanischen Hubbegrenzung 50 stehen mit der Folge, dass er eine Art Schwebestellung einnimmt mit der Folge, dass die Ditherwirkung des Betätigungsmagneten 14 vollständig erhalten bleibt.

Im ausgeschalteten Zustand und im regulären Regelbetrieb bei ausbalanciertem Wege-Ventilkolben 12 der Arbeitsmaschine bleibt die dritte Steuerkante 74 der hydraulischen Hubbegrenzung 70 über dem Ventilkolben 12 (vgl. Fig. 2) vollkommen geschlossen, so dass in diesem Bereich auch keine Leckagen entstehen können.

Mit der erfindungsgemäßen Ventillösung ist es somit möglich, das feinfühlige und gleichzeitig dynamische Ansteuerverhalten von hydraulisch vorgesteuerten Wege-Ventilkolben 12 mittels Einsatzes der hydraulischen Hubbegrenzung 70 deutlich zu verbessern, was insbesondere auch bei kaltem und somit hochviskosem Öl gilt. Dabei bleibt der systembedingte Vorteil der kleinen Leckagen im abgeschalteten sowie bei ausbalanciertem Wege-Ventilkolben in seinem Schwebezustand erhalten. Dies hat so keine Entsprechung im Stand der Technik.

## Patentansprüche

1. Ventil, insbesondere Proportional-Druckregelventil, mit einem Ventilgehäuse (10), einem Betätigungsmagneten (14) und einem in dem Ventilgehäuse (10) längsverfahrbaren Ventilkolben (12) zum wechselweisen Freigeben und Verbinden eines Nutzanschlusses (A) mit einem Druckversorgungsanschluss (P) oder einem Tankanschluss (T), der mittels des Betätigungsmagneten (14) ansteuerbar ist, wobei das Ventil derart eingerichtet ist, dass, wenn im Betrieb dem analogen Ansteuersignal des Betätigungsmagneten (14) für die Betätigung des Ventilkolbens (12) eine Ditherspannung oder ein Ditherstrom als Dithersignal überlagert ist, bewirkt wird, dass der Ventilkolben (12) immer leicht vibriert, damit kein sogenannter Stick-Slip-Effekt auftritt, **dadurch gekennzeichnet, dass** eine hydraulische Hubbegrenzung (70) des Ventilkolbens (12) vorgesehen ist, die im Ventilkolben (12) eine Blende (46) aufweist, die über die Innenseite (44) des Ventilkolbens (12) permanent mit dem Nutzanschluss (A) verbunden ist und die in einen Steuerraum (48) zwischen dem Ventilkolben (12) und dem Ventilgehäuse (10) ausmündet, der in Abhängigkeit der Verfahrstellung des Ventilkolbens (12) mit dem Tankanschluss (T) fluidführend verbunden ist, dass am Außenumfang des Ventilkolbens (12) eine nutartige Vertiefung (72) vorgesehen ist, deren Breite derart gewählt ist, dass in einem Schwebezustand des Ventilkolbens (12) zumindest zeitweise eine fluidführende Verbindung zwischen dem Steuerraum (48) und dem Tankanschluss (T) geschaffen ist, dass die fluidführende Verbindung von einer Steuerkante (74) des Ventilgehäuses (10) als Teil des hydraulischen Hubanschlags (70) begrenzt ist, die von dem Ventilkolben (12) oder seiner nutartigen Vertiefung (72) überfahrbar ist, und dass der Ventilkolben (12) mittels der hydraulischen Hubbegrenzung (70) für den Erhalt der Dithersignalwirkung derart in die Schwebeposition innerhalb des Ventilgehäuses (10) gelangt, dass im hydraulischen Sinne die weitere Steuerkante (74) geschaffen ist, die einen fluidischen Kraftaufbau am Ventilkolben (12) erlaubt, der größer als die wirkenden Magnetkräfte des an dem Ventilkolben (12) angreifenden Betätigungsmagneten (14) ist, wodurch der Ventilkolben (12) kurz vor Erreichen einer mechanischen Hubbegrenzung (50) anhaltbar ist, die aus einem Anschlag (52) zwischen dem Ventilkolben (12) und dem Ventilgehäuse (10) besteht.

2. Ventil nach Anspruch 1, **dadurch gekennzeichnet, dass** in dem Steuerraum (48) ein Energiespeicher, insbesondere in Form einer Druckfeder (78), aufgenommen ist, der sich mit seinem einen Ende an dem Ventilgehäuse (10) und mit seinem anderen Ende an dem Ventilkolben (12) abstützt.

3. Ventil nach Anspruch 1 oder 2, **dadurch gekennzeichnet, dass** bei Erreichen des Anschlags (52) die fluidführende Verbindung zwischen dem Nutzanschluss (A) und dem Tankanschluss (T) unterbunden und zum Druckversorgungsanschluss (P) zumindest teilweise hergestellt ist.

4. Ventil nach einem der vorstehenden Ansprüche, **dadurch gekennzeichnet, dass** in einer mittleren Regelstellung des Ventilkolbens (12), ohne Abnahmemenge in Richtung des Nutzanschlusses (A), der Ventilkolben (12) gerade eben den Druckversorgungsanschluss (P) und den Tankanschluss (T) mit ihren jeweiligen Steuerkanten (64, 66) verschließt.

5. Ventil nach einem der vorstehenden Ansprüche, **dadurch gekennzeichnet, dass** der Ventilkolben (12) einen Querkanal (60) aufweist, der die Innenseite (44) des Ventilkolbens (12) permanent fluidführend mit einem weiteren, zweiten Steuerraum (62) zwischen Ventilgehäuse (10) und Ventilkolben (12) verbindet, der im Ventilgehäuse (10) zusammen mit dem Ventilkolben (12) längsverfahrbar geführt die jeweilige fluidführende Verbindung zwischen den einzelnen Anschlüssen (A, P, T) herstellt oder wieder trennt.

6. Ventil nach einem der vorstehenden Ansprüche, **dadurch gekennzeichnet, dass** an der Rückseite (38) des Ventilkolbens (12) der Betätigungsmagnet (14) mit einem Steuerkolben (36) angreift, dessen wirksame Betätigungsfläche der wirksamen Kolbenfläche des Ventilkolbens (12) entspricht und dass die Rückseite (38) des Ventilkolbens (12) in einem weiteren, dritten Steuerraum (58) geführt ist, der mit dem ersten Steuerraum (48) fluidführend verbunden ist, sobald der Ventilkolben (12) die mechanische Hubbegrenzung (50) respektive den Anschlag (52) verlässt.

7. Ventil nach einem der vorstehenden Ansprüche, **dadurch gekennzeichnet, dass** der Ventilkolben (12) an seiner freien, seiner Rückseite (38) gegenüberliegenden Vorderseite mit einer Steuerfläche (68) dem Druck am Nutzanschluss (A) ausgesetzt ist und ansonsten nur vom zweiten Steuerraum (62) unterbrochen mit einem im Wesentlichen konstanten Außendurchmesser im Ventilgehäuse (10) bis zum Erreichen einer Verbreiterung des Ventilkolbens als Teil des Anschlags (52) der mechanischen Hubbegrenzung (50) geführt ist.

8. Ventil nach einem der vorstehenden Ansprüche, **dadurch gekennzeichnet, dass** das Ventilgehäuse (10) mit seinen Anschlüssen (A, P, T) als Einbaupatrone für ein Drittbauteil ausgeführt ist.

## Claims

1. Valve, in particular a proportional pressure control valve with a valve housing (10), an actuating magnet (14) and a valve piston (12) that moves in a longitudinal direction in the valve housing (10) to alternately release and connect a service connection (A) to a pressure supply connection (P) or a tank connection (T), which can be controlled by means of the actuating magnet (14), said valve being set up such that, if, during operation, a dither voltage or a dither current is superimposed as a dither signal on the analogue trigger signal for the actuating magnet (14) to actuate the valve piston (12), this causes the valve piston (12) to constantly vibrate slightly so that the so-called slip-stick effect does not occur, **characterised in that** a hydraulic stroke limiter (70) is provided for the valve piston (12), said stroke limiter comprising a restrictor (46) in the valve piston (12), said restrictor being permanently connected to the service connection (A) via the inside (44) of the valve piston (12) and leading into a control chamber (48) between the valve piston (12) and the valve housing (10), said chamber being connected to the tank connection (T) such as to convey fluids dependent on the travel position of the valve piston (12), **in that** a groove-type recess (72) is provided on the outer periphery of the valve piston (12), the width of said recess being selected such that a fluid-conveying connection is created at least sometimes between the control chamber (48) and the tank connection (T) when the valve piston (12) is in a floating state, **in that** the fluid-conveying connection is limited by a control edge (74) of the valve housing (10) as part of the hydraulic travel stop (70), where the valve piston (12) or its groove-type recess (72) can travel over said control edge, and **in that** the valve piston (12) moves into the floating position inside the valve housing (10) by means of the hydraulic stroke limiter (70) to achieve the dither signal effect in such a way as to create the other control edge (74) in the hydraulic sense, which allows a fluidic force to be generated on the valve piston (12), said force being greater than the active magnetic forces from the actuating magnets (14) acting on the valve piston (12), causing the valve piston (12) to be able to stop just before it reaches a mechanical stroke limiter (50), which consists of a stop (52) between the valve piston (12) and the valve housing (10).

2. Valve according to claim 1, **characterised in that** an energy storage device, particularly in the form of a compression spring (78), is incorporated in the control chamber (48), said storage device being supported with one end on the valve housing (10) and with the other end on the valve piston (12).

3. Valve according to either claim 1 or claim 2, **characterised in that** the fluid-conveying connection between the service connection (A) and the tank connection (T) is interrupted and at least partially established to the pressure supply connection (P) when the stop (52) is reached.

4. Valve according to any one of the preceding claims, **characterised in that** the valve piston (12) just closes the pressure supply connection (P) and the tank connection (T) with their respective control edges (64, 66) when the valve piston (12) is in a middle control position, without any discharge volume towards the service connection (A).

5. Valve according to any one of the preceding claims, **characterised in that** the valve piston (12) comprises a transverse channel (60), which connects the inside (44) of the valve piston (12) to another, second control chamber (62) between the valve housing (10) and the valve piston (12) such that this can permanently convey fluids, said control chamber, which is guided in the valve housing (10) together with the valve piston (12) such that they can move in the longitudinal direction, establishing or interrupting the respective fluid-conveying connection between the individual connections (A, P, T).

6. Valve according to any one of the preceding claims, **characterised in that** the actuating magnet (14) on the rear side of the valve piston (12) engages with a control piston (36), which has an effective actuating surface that corresponds to the effective piston surface of the valve piston (12), and **in that** the rear side (38) of the valve piston (12) is guided in another, third control chamber (58), which is connected to the first control chamber (48) such as to convey fluids as soon as the valve piston (12) leaves the mechanical stroke limiter (50) or the stop (52) respectively.

7. Valve according to any one of the preceding claims, **characterised in that** the valve piston (12) is exposed to the pressure at the service connection (A) on its free front side, which is opposite its rear side (38), with a control surface (68), and is otherwise guided in the valve housing (TO) with a substantially constant outer diameter, only interrupted by the second control chamber (62), until it reaches a widening in the valve piston as part of the stop (52) in the mechanical stroke limiter (50).

8. Valve according to any one of the preceding claims, **characterised in that** the valve housing (10) is designed, along with its connections (A, P, T), as a cartridge insert for a third component.

## Revendications

1. Vanne, notamment vanne de réglage de la pression proportionnelle, comprenant un corps (10) de vanne, un aimant (14) d'actionnement et un piston (12) de vanne, qui peut se déplacer longitudinalement dans le corps (10) de la vanne pour, au choix, dégager et relier un raccord (A) utile à un raccord (P) d'alimentation en pression ou à un raccord (T) de réservoir et qui peut être commandé au moyen de l'aimant (14) d'actionnement, la vanne étant conçue de manière à faire que, si en fonctionnement il est superposé au signal de commande analogique de l'aimant (14) d'actionnement pour l'actionnement du piston (12) de la vanne, une tension de tremblement ou un courant de tremblement comme signal de tremblement, le piston (12) de la vanne vibre toujours légèrement, de manière à ce qu'il ne se produise pas ce que l'on appelle l'effet stick-slip, **caractérisée en ce qu'**il est prévu une limitation (70) de course hydraulique du piston de la vanne, limitation qui a, dans le piston (12) de la vanne, un diaphragme (46), qui est relié, par le côté (44) intérieur du piston (12) de la vanne, en permanence au raccord (A) utile et qui débouche dans un espace (48) de commande entre le piston (12) de la vanne et le corps (10) de la vanne, espace qui, en fonction de la position en déplacement du piston (12) de la vanne, communique fluidiquement avec le raccord (T) de réservoir, **en ce qu'**il est prévu, sur le pourtour extérieur du piston (12) de la vanne, une cavité (72) de type en rainure, dont la largeur est choisie de manière à donner, dans un état flottant du piston (12) de la vanne, au moins de temps en temps, une communication fluidique entre l'espace (48) de commande et le raccord (T) de réservoir, **en ce que** la communication fluidique est limitée par un bord (74) de commande du corps (10) de la soupape, comme partie de butée (70) de course hydraulique, qui peut être passée par le piston (12) de la vanne ou par sa cavité (72) de type en rainure et **en ce que** le piston (12) de la vanne parvient, au moyen de la limitation (70) de course hydraulique pour l'obtention de l'effet de signal de tremblement, dans la position flottante à l'intérieur du corps (10) de la vanne, de manière à créer au sens hydraulique l'autre bord (74) de commande, lequel permet l'établissement d'une force fluidique sur le piston (12) de la vanne, qui est plus grande que les forces magnétiques agissantes de l'aimant (14) d'actionnement attaquant le piston (12) de la vanne, grâce à quoi le piston (12) de la vanne peut être arrêté peu avant d'atteindre une limitation (50) de course mécanique, constitué d'une butée (52) entre le piston (12) de la vanne et le corps (10) de la vanne.

2. Vanne suivant la revendication 1, **caractérisée en ce que**, dans l'espace (48) de commande, est logé un accumulateur d'énergie, notamment sous la forme d'un ressort (78) de compression, qui s'appuie, par l'une de ses extrémités, sur le corps (10) de la vanne et, par son autre extrémité, sur le piston (12) de la vanne.

3. Vanne suivant la revendication 1 ou 2, **caractérisée en ce que**, lorsque la butée (52) est atteinte, la communication fluidique entre le raccord (A) utile et le raccord (T) de réservoir est supprimée et est ménagée, au moins en partie, vers le raccord (P) d'alimentation en pression.

4. Vanne suivant l'une des revendications précédentes, **caractérisée en ce que**, dans une position de régulation moyenne du piston (12) de la vanne, sans quantité de prélèvement en direction du raccord (A) utile, le piston (12) de la vanne ferme juste exactement le raccord (P) d'alimentation en pression et le raccord (T) du réservoir par ses bords (64, 66) respectifs de commande.

5. Vanne suivant l'une des revendications précédentes, **caractérisée en ce que** le piston (12) de la vanne a un canal (60) transversal, qui met le côté (44) intérieur du piston (12) de la vanne en permanence en communication fluidique avec un autre deuxième espace (62) de commande entre le corps (10) de la vanne et le piston (12) de la vanne, qui, en étant guidé à déplacement longitudinal dans le corps (10) de la vanne ensemble avec le piston (12) de la vanne, ménage à nouveau la communication fluidique respective entre les divers raccords (A, P, T) ou le refait cesser.

6. Vanne suivant l'une des revendications précédentes, **caractérisée en ce que** l'aimant (14) d'actionnement attaque le côté (38) arrière du piston (12) de la vanne par un piston (36) de commande, dont la surface d'actionnement efficace correspond à la surface de piston efficace du piston (12) de la vanne et **en ce que** le côté (38) arrière du piston (12) de la vanne est guidé dans un autre troisième espace (58) de commande, qui communique fluidiquement avec le premier espace (48) de commande dès que le piston (12) de la vanne quitte la limitation (50) de course mécanique, respectivement, la butée (52).

7. Vanne suivant l'une des revendications précédentes, **caractérisée en ce que** le piston (12) de la vanne est soumis, à son coté avant libre, opposé à son côté (38) arrière, ayant une surface (68) de commande, à la pression du raccord (A) utile et, sinon, est guidé, en étant interrompu seulement par le deuxième espace (62) de commande, avec un diamètre extérieur sensiblement constant, dans le corps (10) de la vanne jusqu'à atteindre un élargissement du piston de la vanne comme partie de la butée (52) de la limitation (50) de course mécanique.

8. Vanne suivant l'une des revendications précédentes, **caractérisée en ce que** le corps (10) de la vanne est réalisé avec ses raccord (A, P, T), sous la forme d'une cartouche de montage d'une pièce tierce.
